# EUROPEAN PATENT APPLICATION

(11) **EP 2 700 906 A1**
(43) Date of publication of application: **26.02.2014**
(21) Application number: 12181503.9
(22) Date of filing: 23.08.2012
(51) Int. Cl.: G01C 21/36, G09B 29/10

(54) **Method for displaying map views and a map viewing system**

(71) Applicant: Harman Becker Automotive Systems GmbH, 76307 Karlsbad (DE)
(72) Inventor: Hansen, Lars, 80939 Munich (DE)
(74) Representative: Meier, Florian

(57) **Abstract**

Various embodiments relate to a method and a device for depicting geographical map data in the form of at least two map views (20a, 21a) on a display (1), in particular of a navigation device. The map views are arranged such that a reference location (2) has the same position on the display (1) within, both, the coordinate systems corresponding to the at least first and second map views (20a, 21a). The first map view (20a) is associated with a first scale and the second map view (21a) is associated with a second scale. A predefined scale ratio of the second scale with respect to the first scale is obtained.

## Description

### Technical Field

Various embodiments relate to a method and a system for displaying at least two map views on a display, in particular on a display being part of a vehicle navigation device.

### Background

Optical output devices such as displays are commonly used for displaying geographical data in the form of map views to a user. They are particularly used in navigation devices, for example in vehicles, where a graphical representation of map data helps a user to navigate the vehicle. Typically, for users of vehicle navigation displays, there are two relevant scales meaning the ratio model:reality on which map information is useful and desired.

A first relevant scale displays map information of the close vicinity of a geographical location being of particular interest to the user. Such a map view should contain a high level of detail of geographical information and have a large scale which allows the user to separate neighbouring details of the map view conveniently.

The second relevant scale displays longer distances and large-area features. Typically, in a fast-moving vehicle travelling over longer distances, there is the need to provide a map view which allows for general and coarse orientation with only those features being displayed that are important for the orientation.

In today's navigation systems the user has the possibility to select a certain scale of the map view. Depending on the selected scale, the map view is then either adapted for coarse orientation, i.e. a small scale with low level of detail, or for precision orientation, i.e. large scale with high level of detail, around a region of its interest.

It can be desired to provide map views with large scale and small scale at the same moment in time. This is because the user may travel in a region that he is not familiar with. While in such a foreign region he is in need for precision navigation to find a certain point of interest or allow for navigation, at the same time, in order to provide coarse orientation, he needs to relate this large scale map view to known features, which are typically large-area features such as large cities, rivers, country borders etc. Such features only become visible in a small scale map view.

In order to provide both a large scale and a small scale map view to a user in a navigation system at the same moment in time, different approaches are known.

In WO 00/23767 a second map is displayed adjacent or within a first map. The second map has a second scale corresponding to a larger scale if compared to the first scale of the first map. The second map can move around the position on the display within the first map as the current vehicle location changes, so that the vehicle location remains displayed within the second map.

In EP 1 901 038 A1 a first map view is displayed within a second map view. The first map view has a larger scale than the second map view. A common ruler associated with the scales of the first and the second map view is displayed on the display.

Although such systems improve the possibility for orientation of the user, they still face certain problems. In certain situations it may be desirable to change the scale of either one of the large scale map view or the small scale map view. When one of the scales is altered according to the approaches as outlined above, the already complex relationship between the different map views is further altered. For the user it is then difficult to perceive and understand the altered relationship between the displayed areas. If the user is a driver of, e.g. a vehicle, the driver may be distracted for a significant time before orientation based on the displayed map views is eventually regained.

Moreover, when the alignment of the two map views on the display is not well specified, relating the geographical areas covered by the two map views is difficult for the user. The user may be distracted. At the same time, flexible positioning of the large scale map view may be desired in order to depict certain geographical features at a high level of detail. For example, EP 1 901 038 A1 only discloses a centered map view of large scale. WO 00/23767 does not disclose a deterministic relation between the positioning of the two map views. This makes it difficult for the user to perceive and relate the geographical information of the map views without being distracted for a long time.

### Summary of the invention

Accordingly, a need exists to provide map views of different scales with a well-defined relation of their arrangement, location, and orientation on the display and scale to facilitate orientation of the user and to obviate at least some of the drawbacks mentioned above.

In order to solve this object, the various embodiments relate a method of displaying map views on a display and a map viewing system displaying map views on a display according to the independent claims. The dependent claims define embodiments.

According to an aspect, a method of displaying map views on a display is provided. According to this method, a reference location is received in the form of geographic coordinates. A first map view and a second map view are displayed simultaneously, wherein the first map view is based on a first coordinate system with a first scale and the second map view is based on a second coordinate system with a second scale being different from the first scale. The second map view contains the reference location and the reference location has the same position on the display in both the first and second coordinate systems. When the scale of one of the two map views is changed, the scale of the other one of the two map views is automatically determined in such a way that a predefined ratio of the second scale with respect to the first scale is obtained.

The reference location may be a location used for orientation and/or alignment of the map views on the display. The coordinate system associates positions on the display with geographical coordinates. Inherently associated with such a coordinate system is a scale. The scale defines the ratio between a certain geographical distance as depicted on the display and the geographical distance itself.

Such a method has the effect that even though the reference location is displayed within the second map view, its position on the display would be the same in the first map view as it is in the second map view if the second map view was not visible. This results in a clear relationship between the arrangement of the first and second map views on the display and allows the user to relate the information displayed by the first and the second map views at one glance.

When the orientation of one of the map views is changed, the orientation of the other map view may be changed accordingly. For example, the first map view may have an orientation such that it faces a North direction or the direction of travel or any other direction. When the orientation of the first map view is changed, the orientation of the second map view may be changed accordingly.

When, for example, the first scale is changed, either automatically or by the user, the second scale may be subsequently determined, in order to obtain the predefined scale ratio between the two scales. This ensures that the relationship between the first and the second map view is not only maintained with respect to their arrangement on the display, but also with respect to their scales. A user can thus easily perceive and relate the map information displayed in the first map view and the second map view. This allows for orientation at one glance. The likelihood for dangerous distraction of the user during driving a vehicle is significantly reduced.

A map view may contain at least one of the following: information on streets in the form of depicted road segments, other geographical information such as forests, lakes, settlements, landmarks, information used for route guidance, such as a calculated route, information on required turnings or intersections, traffic information, weather information, geographical names labelling the contents of the map view, a scale bar indicating the scale, or the like.

The method for displaying map views on a display and a respective map viewing system displaying map views on a display may be used with respect to or may be part of a navigation system for use in a vehicle, a mobile computer, a mobile telephone, a portable digital assistant (PDA), or the like.

According to an embodiment, the second map view may be arranged such that it is substantially centred with respect to the reference location. Substantially centered may mean that the geographical area covered by the second map view extends in different directions from the reference location in substantially equal distances. This can be preferable in situations where it is desired to provide information on the geography located in arbitrary directions around the reference location to the user, i.e. where no preferred direction exists. For example, if the reference location corresponds to a landmark, the user might want to check for possible parking positions for the vehicle without having in mind a particular preferred area located in a certain direction from the landmark.

Furthermore, it is possible that the second scale is larger than the first scale corresponding to the first map view. The optical effect achieved may be similar to a loupe effect.

According to another embodiment, when the reference location is changed, the first and the second map views may be updated accordingly. Therefore, when, for example, the reference location is automatically changed, both map views may be adapted such that the reference location is contained within the second map view at all times and the desired geographical area is covered by the second map view. For example, when the user changes the reference location manually, e.g. via some input device such as a joystick or a push-button, the map views may be updated simultaneously or with a desired time shift. This allows the user to scroll around the geographical area and position second map view at a certain area of special interest.

According to another embodiment, the scale of one of the two map views or the predefined scale ratio can be changed automatically depending on the reference location. By way of example, when the reference location corresponds to a location situated on a road highway, where cars typically travel at a high velocity, it could be favourable to display the second map view at a small scale. This is because on highways there is typically no need for depicting geographical data at a high level of detail. On the other hand, when, for example, the reference location corresponds to a geographical location situated within a densely populated area, it could be favourable to use a large second scale. In highly populated areas, such as city centres, typically many streets and points of special interest to the user, such as shops, parking areas, landmarks or the like, exist. In order to provide this detailed information to the user, it may be desirable to depict a second map view at a large scale. It is furthermore possible to adapt the second scale depending on the velocity of movement of the reference location on the map. If, for example, the reference location moves quickly, i.e. has quickly changing geographical coordinates, the second scale may be adapted accordingly.

Similar considerations apply to the setting of the predefined scale ratio. It could be favourable to keep the predefined scale ratio constant if the reference location is within a densely populated area such as a city. This is because coarse orientation is already provided if, for example, a geographical area corresponding substantially to the city extents is covered by the first map view. On the other hand, if the reference location is located on a highway and the second scale is, for example, decreased, then it might be favourable to change the predefined scale ratio accordingly.

It is also possible that the second scale is automatically increased once the reference location is within a predefined distance to a predefined location. For example, many navigation systems, provide an option to guide the user along a predefined route. To this respect and by way of example, it could be favourable to maintain a small second scale as long as the vehicle follows a route only along a street with no route guidances corresponding to turns or intersections. Once the vehicle approaches a location where route guidance becomes necessary, in other words the reference location is within a predefined distance to the predefined location, the second scale may be automatically increased. This may be done to show more details of the, e.g., intersection where route guidance is necessary. It is also possible that the second map view keeps the scale, but the first view has an adapted scale.

The predefined scale ratio can also be automatically increased or decreased once the reference location is within a predefined distance to a predefined location. For example, it could be desirable to increase or decrease the predefined scale ratio once the reference location corresponding to the current location of the vehicle comes within a predefined distance to a certain geographical location corresponding, for example, to a turning point or an intersection on a precalculated route.

It is also possible that the reference location is either a current geographical location of the user or a highlighted geographical location of special interest to the user. For example, many navigation systems have the possibility of locating the present geographical location of the device. If the current geographical location is the reference location, the second map view depicts geographical information on the vicinity of the user for example at a high level of detail by using a large scale. It is also possible that the reference location is a highlighted geographical location selected by the user and therefore of special interest to the user. The highlighted geographical location may also correspond to an automatically selected geographical location. For example, it could be favourable to automatically set the reference location and therefore align the second map view with a location corresponding to a point of interest. Such a point of interest to the user could be the origin of a trip, the destination of a trip, waypoints along a route, certain interesting locations along the route of travel, such as gas stations, landmarks, or sightseeing spots, or geographical locations that are obtained otherwise, for example, geographical locations associated with the contacts of an address book that is part of the navigation system, geographical locations that are received from the outside of the vehicle for example by means of a wireless receiver, geographical locations corresponding to a traffic incident such as congestion or an accident site, or the like. By automatically setting the reference location to a point of interest, it is possible to notify the user of such a geographical location of certain relevance to the user, but, at the same time, not disturb the orientation of the user.

The second scale may depend on the position on the display within the second map view. For example, it can be favourable to distort or strain the coordinate system of the second map view such that the second scale varies as a function of the position on the display. For example, the second scale may be adapted to have the largest scale value close to the reference location and then continuously decrease the scale value towards the outer boundaries of the second map view. Particularly, the position dependence of the second scale can be adapted to provide a continuous change of the second scale.

Moreover, in another embodiment, the second scale may be adapted such that it takes a value equalling the first scale at the outer boundaries of the second map view. By this a continuous transition between the second map view and the first map view may be provided. This may have the advantageous effect that no geographical features are hidden or obstructed by second map view.

The first and second map views may be displayed in contiguous portions of the display, wherein the portion corresponding to the second map view is substantially surrounded by the portion corresponding to the first map view. By partitioning the display into substantially two portions corresponding to the first map view and the second map view, and displaying the map views within these contiguous portions, it is possible to provide a preferred compartmentation of the display. This arrangement may be easily perceivable by the user. When the second map view is substantially surrounded by the portion of the display corresponding to the first map view, an effect such as a map loupe can be achieved.

If there is a geographical region which is hidden because of the particular settings of the coordinate systems of the first and the second map views, this hidden geographical region may be displayed in a portion of the display between the first map view and the second map view in the form of a third map view with a third scale. For example, the second map view may have a second scale which is larger than the first scale corresponding to the first map view. Then a geographical region exists which is not visible to the user. Therefore, it can be favourable to display a third map view around the second map view and in between the second and the first map view, which depicts the hidden geographical area. Then all the information on geographical details within the outer geographical extents of the first map view is available to the user.

The scale range of the third map view may be dependent on the position on the display within the third map view, such that the transitions between the first and the third and between the second and the third scales are continuous. By doing so, it may be very easy for the user to perceive and intuitively understand the partitioning of the display.

According to the invention, also a map viewing system for displaying map views on a display is provided. The map viewing system comprises a map database containing digital map data and a map viewer configured to prepare for display a first map view and a second map view based on the digital map data, such that the first map view is based on a first coordinate system with a first scale, the second map view is based on a second coordinate system with a second scale being different from the first scale, and the second map view contains a reference location in the form of geographic coordinates. The display is configured to simultaneously display the first map view and the second map view.

The reference location has the same position on the display in the first coordinate system and the second coordinate system, wherein, when the scale of one of the two map views is changed, the map viewer is configured to automatically change the scale of the other one of the two map views in such a way that a predefined scale ratio of the second scale with respect to the first scale is obtained.

For a map viewing system having such a configuration, effects corresponding to the effects explained for the corresponding method may be attained.

Further advantageous features of embodiments of the invention are evident from the dependent claims.

### Brief Description of the Drawings

The invention will now be explained in more detail by means of embodiments in the accompanying drawings, in which:
Fig. 1 shows a display displaying a first and second map view, wherein the second map view has a larger scale than the first map view;
Fig. 2 is a schematic view of a display displaying two map views where the reference location and the current location correspond to different geographical coordinates;
Fig. 3 is a flowchart illustrating an embodiment of a method for displaying map views according to the present invention;
Fig. 4 is a flowchart illustrating a further embodiment of the method for displaying map views according to a further embodiment of the present invention;
Fig. 5 is a schematic view illustrating partitioning of a display according to an embodiment of the present invention into a first map view, a second map view, and a third map view, the third map view depicting a hidden geographical area;
Fig. 6 is a schematic view of a display displaying the three map views according to an embodiment of the present invention as illustrated in Fig. 5;
Fig. 7 shows a display displaying two map views, where the second map view has a scale dependent on the position on the display within the second map view, illustrating an embodiment of the present invention;
Fig. 8 is a schematic view of a display displaying two map views according to an embodiment of the present invention;
Fig. 9 is a schematic representation of a map viewing system for displaying map views on a display according to an embodiment of the present invention;
Fig. 10 is a schematic view illustrating partitioning of a display according to an embodiment of the present invention into a first map view, a second map view, and a third map view, the third map view depicting a hidden geographical area.

### Description of Embodiments

Hereinafter embodiments of the invention will be described with reference to the drawings. It is to be understood that the present invention is not limited to the specific embodiments described herein and that the features of the various embodiments may be combined with each other unless explicitly stated otherwise.

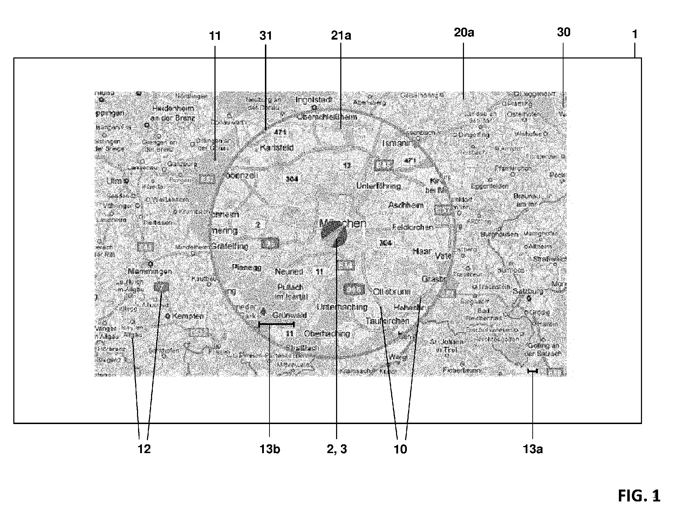

Fig. 1 is a schematic view of a display 1 displaying a first map view 20a and a second map view 21a. The display 1 displays the first and second map views 20a, 21a according to a method of the present invention. Accordingly, display 1 can be part of a map viewing system for displaying map views on a display, for example in a navigation device for vehicles, in a portable device, or in a computer. From Fig. 1, it can be seen that according to a specific embodiment not all of the display may be used to display the first and the second map views 20a, 21a. Only a portion of the display 1 may be used to display the map views.

Within second map view 21a, a reference location 2 is contained and graphically indicated by a circle with an embedded triangle. In the depicted embodiment, the reference location 2 corresponds to the same geographical location as current location 3 of the map viewing system. The map viewing system can obtain information on the current location 3, for example, via a global positioning system unit, via the cellular network, or the like.

The first map view 20a and the second map view 21a are arranged within the display 1 such that the reference location 2 has the same position on the display in the second map view and, if the second map view was not visible, in the first map view 20a. In other words, the position on the display corresponding to the reference location 2 is the same in the coordinate systems of the first map view 20a and the second map view 21a. Therefore, first map view 20a and second map view 21a have a fixed arrangement/orientation with respect to each other and with respect to the reference location.

A second map view's outer boundary 31 is graphically indicated in the form of a visible boundary. Both first and second map views display contents typically associated with maps, such as road segments 10, other geographical information 11, such as indication of forests, lakes, settlements, or the like, as well as geographical denominators 12, indicating names of settlements and identifying roads. Furthermore, depicted in the first and second map views 20a, 21a are indicators of the scale 13a, 13b, i.e. scale bars representing a predefined distance within the corresponding coordinate system. As can be seen from Fig. 1, the scale bar 13a, located within first map view 20a, has a smaller extent on the display than the second scale bar 13b, located within second map view 21a. This is the graphical representation of the second map view 21a having a larger scale than the first map view 20a. This allows the user to perceive the geographical area around the current location at a high level of detail. For example, minor roads are labelled using geographical denominators, small settlements are provided with geographical denominators, and small road segments are displayed within the second map view 21a. Still a coarse orientation by means of the first map view 20a is maintained. In particular, it is possible to relate the geographical area depicted by the second map view 21a to the geographical area depicted by the first map view 20a.

As can be further seen from Fig. 1, the display portion corresponding to the second map view 21a has a circular shape. Moreover, the second map view 21a and the first map view 20a are both centred with respect to the reference location.

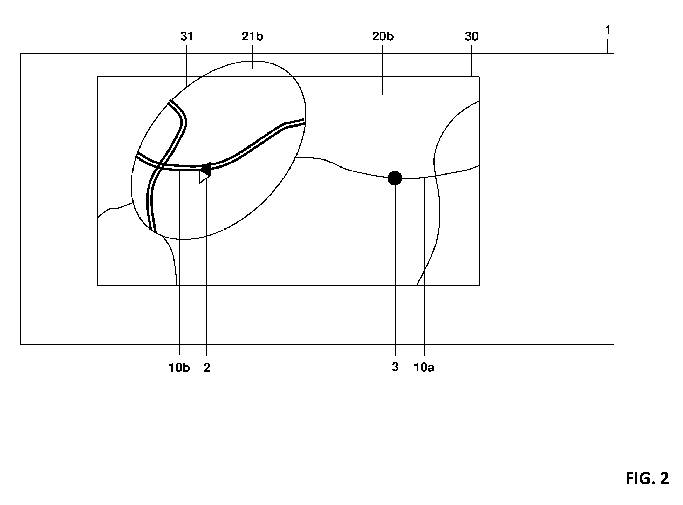

Fig. 2 is a schematic representation of a display 1 for displaying map views according to an embodiment of the present invention. Display 1 comprises two map views, a first map view 20b and a second map view 21b. Second map view 21 b contains the reference location 2. Reference location 2 corresponds to a geographical coordinate different to the current position 3. As a result, second map view 21b does not contain the current location 3.

Moreover, second map view 21b is not centred within the first map view 20b. It is rather shifted to one side of the first map view 20b. Second map view 21b also extends over the outer boundaries 30 of the first map view. Second map view 21b does not have a circular shape according to the presently discussed embodiment. It can be favourable to adapt the shape of the portion on the display corresponding to the second map view 21b such that it displays certain geographical information of relevance to the user.

In Fig. 2, the current position 3 is located on a road segment 10a and the reference location 2 is located on another road segment 10b. It should be understood that neither the current location 3 nor the reference location 2 needs to be positioned on a road segment. In particular, reference location 2, according to an embodiment of the present invention, can be moved on the display 1 by the user.

Also, reference location 2 can be automatically set to some highlighted location of special interest to the user. Such a highlighted location could be one of the following, but is not limited thereto: the destination of a route guidance, the origin of a route guidance, a particular landmark of special interest to the user, a location corresponding to a traffic event such as a traffic congestion or a dangerous situation, a parking lot, a hotel, a restaurant, or the like. By automatically setting the reference location to a highlighted location, it is possible to allow the user to perceive associated information at a high level of surrounding geographical details, while not limiting or disturbing the possibility for coarse orientation.

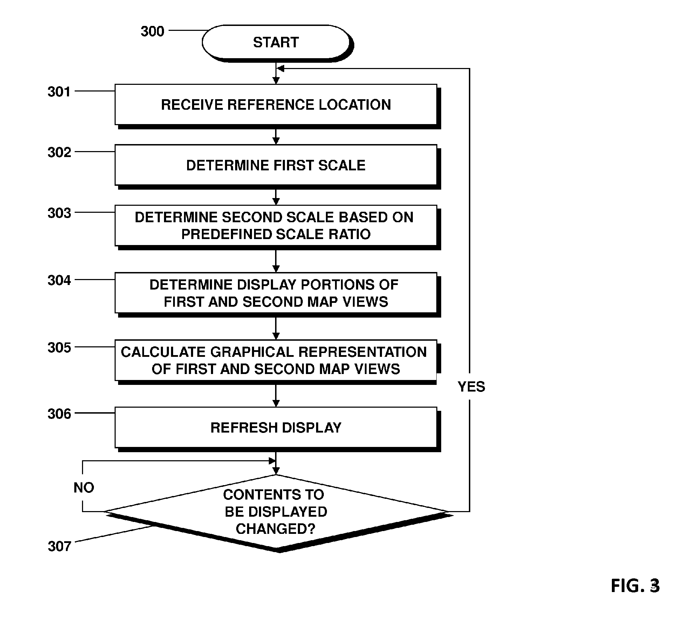

Fig. 3 depicts a flow diagram illustrating a method according to the present invention. Fig. 3 shows in detail how the determining and setting of the first scale corresponding to the first map view and the second scale corresponding to the second map view, as well as the positioning on the display of the first and the second map views is achieved according to an embodiment of the present invention. The method commences with step 300. In step 301 the reference location is received. The reference location can be received, for example, from a global positioning system unit, a traffic event receiver, an input device allowing the user to input the reference location, a processor for automatically determining a specific reference location, or the like. Therefore, the reference location can either correspond to the current location or can correspond to a geographical location different to the current location.

Once the reference location is received in step 301, in step 302, a first scale is determined. The first scale corresponds to the scale of the first map view. The first scale can be determined according to a user input or can be determined automatically via the system. If it is determined automatically, factors entering this determination can be one of the following, but are not limited thereto: current velocity, road segment type or road classification, position of the current location within or without a settlement, position of the current location close to a point of route guidance along a precalculated route, distance to destination, distance to origin of route, distance to a landmark, distance to a point of interest to the user.

Next, in step 303 the second scale is determined based on a predefined scale ratio of the first scale with respect to the second scale. For example, in a preferred embodiment, if the predefined scale ratio is four, the second scale of the second map view is four times larger than the first scale of the first map view.

Next, in step 304, the display portions corresponding to the first and second map views are determined. The determination of the display portions corresponding to the first and second map views can occur based on at least one of the following parameters, but is not limited thereto: size of the second map view on the display, reference location, current location, relation between reference location and current location, display size, display resolution, or any of the parameters as listed with respect to step 302 and the determination of the first scale.

For example, if the reference location is the current location, the display portions corresponding to the map views can be arranged such that the reference location is in the center of the display. In a further example, if the reference location is different to the current location, the first map view may be arranged such that the current position is displayed within the first map view and/or the center of the display, while the second map view depicts the reference location, e.g., in the center of the second map view. The display portion corresponding to the second map view may, by way of example, occupy half the distance on the display between the reference and the current position.

In a further example, if the velocity of the vehicle is high, the display portion corresponding to the second map view may occupy a larger area on the display if compared to the case when the velocity is small.

In a further example, if the vehicle is on a highway, the display portion corresponding to the second map view may occupy a smaller area on the display if compared to the case when the vehicle is on a road with speed limit within a city.

In a further example, the shape of the second map view may be adapted such that in the direction of driving a larger geographical area is depicted than in another direction. This is favourable, since features ahead of the vehicle are depicted, while features that have already been passed are not visible in the display. For example, the destination is typically ahead of the vehicle.

In a further example, the shape of the second map view may be adapted such that, both, the reference location, as well as a highlighted or user-selected position is contained in the second map view. For example, if the vehicle approaches a highlighted position, such as a point of interest or the like, the shape of the second map view may be adapted such that it contains, both, the reference location, i.e. the current location, as well as the highlighted position. This may result in a particular shape of the second map views and allows for easy orientation of the driver, because both the current position as well as the highlighted position is visible.

Next, in step 305, the graphical representations of the first and second map views are calculated. Typically, the calculation of graphical representations for outputting on a display is achieved by a graphical processor. The calculation of the graphical representation can be adapted such that only graphical representations that are visible to the user are calculated, this means that, in particular, a graphical representation of the display portion corresponding to the first map view hidden by the second map view is not calculated. However, if it is favourable to overlay the second map view on the first map view, it is also possible to calculate graphical representation of the entire first map view, including the display portion which is subsequently hidden by the second map view. For example, it could be favourable to depict second map view in a semi-transparent manner, i.e. show some features of first map view underneath second map view. Then it is necessary to calculate graphical representations of, both, first and second map views in the area associated with the second map view. It may be possible to calculate the first and second map views in any case, e.g., using separate calculating units, and overlay the second map view while setting a transparency value between 0% and 100%.

Next, in step 306, based on the calculated graphical representations of the first and second map views as outlined with respect to step 305, the display is refreshed. This means that a graphical output which is based on the graphical representations of the first and second map views is sent to the display for displaying to the user. The information displayed on the display is not limited to the first and the second map view, but can include other information of relevance to the user, such as velocity, temperature, traffic information, car information, or the like.

Once the display is updated accordingly in step 306, next, in step 307, it is checked if any contents to be displayed on the display are changed. If no changes are detected, there may be no need to update the display. However, if changes are detected, the method as described starts over with step 301. The checking for changes in the contents of the display is repeated until changes are detected. The checking for changes may occur at a given repetition rate or triggered by an event.

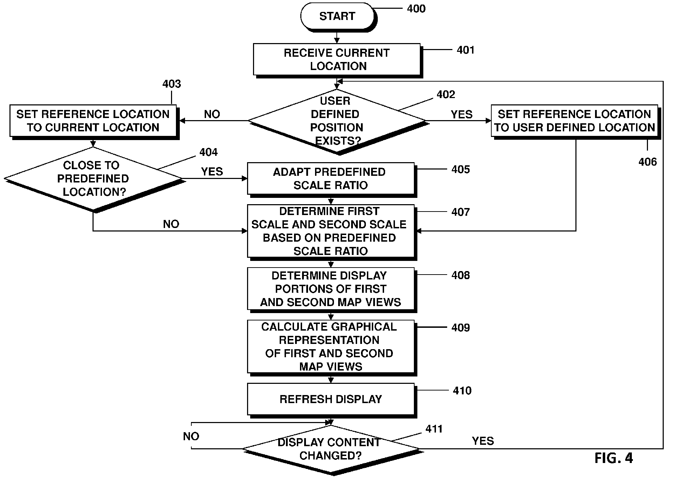

Fig. 4 is a flowchart illustrating a method according to a further embodiment of the present invention. In particular, a further embodiment corresponding to the adaptation of the predefined scale ratio is illustrated. The process commences with step 400. First, in step 401, a current location is received. In step 402, it is checked whether a user-defined position exists. A user-defined position could be provided by the user. In case no user-defined position exists, the next step is step 403. The reference location is set to the current location due to the lack of a user-defined position.

Next, in step 404, it is checked whether the reference location, which now corresponds to the current location, is close to a predefined location. By way of example, such a check could be performed by determining whether the reference location is within a predefined distance to a predefined location, or is within a predefined distance corresponding to a predefined travel time to a predefined location.

In case it is detected that the reference location is close to a predefined location, the process commences with step 405. In step 405, the predefined scale ratio is adapted. The type and the amount of adaptation of the predefined scale ratio can depend on the type of the predefined location. For example, if the predefined location is associated with a route guidance instruction, for example because the vehicle approaches a turning point along a calculated route, the predefined scale ratio can be decreased such that the second map view depicts the turning point at a larger scale while the scale of the first map view remains constant.

Differently, if the predefined location corresponds, for example, to a traffic event on the route ahead, the predefined scale ratio can be decreased. Because the traffic event is typically not associated with a high level of geographical detail, it can be favourable to adapt the predefined scale ratio such that the user can relate the current position to the position of the traffic event within the second map view only. It should be understood that once the predefined scale ratio is adapted due to a situation as outlined above, it may stay constant for a significant time.

If, on the other hand, in step 402, it is detected that a user-defined location exists, the process according to the present embodiment of the invention commences with step 406. In step 406, the reference location is set to the user-defined location.

Step 407 can be reached either from step 404, if the reference location is not close to a predefined location, from step 405, after the predefined scale ratio has been adapted, or from step 406, if the reference location is set to a user-defined location. In any case, a reference location exists and the predefined scale ratio is obtained.

It should be understood that the possible embodiments are not limited to the presently discussed embodiment. For example, it could be possible to perform step 404, i.e. checking if the reference location is close to a predefined location, also with respect to existence of a user defined position, i.e. after step 406.

In step 407, according to steps 302 and 303 discussed with respect to Fig. 3 above, the first scale and, based on this, the second scale are determined.

The following steps 408 to 411 correspond to the steps 304 to 307 as explained with respect to Fig. 3 above.

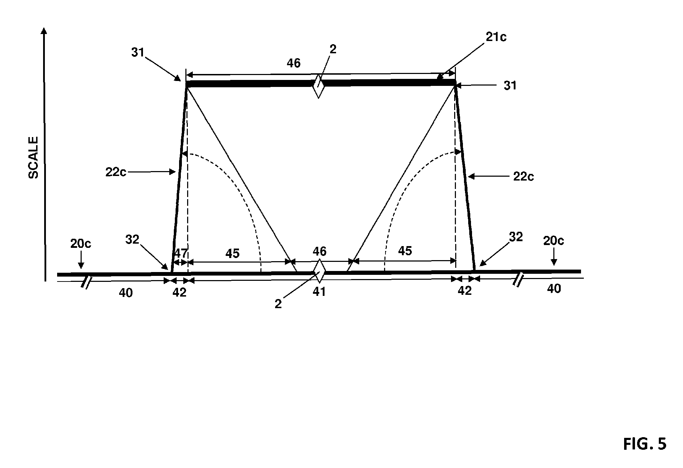

Depicted in Fig. 5 is a schematic representation of the partitioning of the display for displaying map views according to the present invention in an embodiment where a third map view 22c exists in a display portion between/display portions corresponding to a first map view 20c and a second map view 21c. The upper portion of Fig. 5 represents the coordinate system corresponding to the second map view 21c, while the lower portion of Fig. 5 represents the coordinate system corresponding to the first map view 20c. In Figure 5, the scale increases for coordinate systems depicted in upper parts of the Figure.

The first map view 20c occupies a portion 40 of the display. The third map view occupies a portion 42 of the display. The second map view occupies a portion 41 of the display. Third map view display portion 42 is arranged in between and in contact with first and second map view display portions 40, 41. Therefore, first map view 20c and third map view 22c have a common border 32; also second map view 21c and third map view 22c have a common border 31.

As can be seen from Fig. 5, reference location 2 is contained within second map view 21c, i.e. depicted within second map view display portion 41. Moreover, the reference location 2 has the same position in the coordinate system corresponding to the first map view 20c (lower portion of Fig. 5) as it has in the coordinate system corresponding to the second map view 21c (upper portion of Fig. 5). According to the embodiment as depicted in Fig. 5, second map view 21c has a larger second scale if compared to the first scale of the first map view 20c. Graphically this is indicated by the fact that the geographic area 46 corresponding to the second map view has a larger extent in the coordinate system of the second map view 21c than the same geographic area 46 has in the coordinate system of the first map view 20c.

A hidden geographical area 45 exists. When displaying only the first and the second map view, any geographical information located within the hidden geographical area 45 is not visible on the display and therefore not available to the user. Therefore, according to the current embodiment of the present invention, it is preferable to provide a third map view 22c, which is located on the display in between the second map 21c and the first map view 20c, which substantially depicts the hidden geographical area 45.

In Fig. 5, it is indicated by dashed arrows that the hidden geographical area 45 is projected onto the third map view 22c. Depending on the position of the display within third map view 22c, the scale changes. This is indicated by the vertical extents of the third map view 22c in Fig. 5. By changing continuously the scale as a function of the position on the display, at the outer boundary of the second map view 31, the scale of the second map view 21c and the third map view 22c are preferably the same. Correspondingly, the scales of the third map view 22c and the first map view 20c are the same at the outer boundary of the third map view 32. This is advantageous as it makes it easy for the user to optically perceive and intuitively understand the partitioning of the display if first, second, and third map views are used.

It should be noted that the portion of the geographical area displayed by the third map view 22c is not limited to the hidden geographical area 45. Rather an additional geographical area 47 is contained within third map view 22c. Additional geographical area 47 would not be hidden by second map view 21c if third map view 22c was not present.

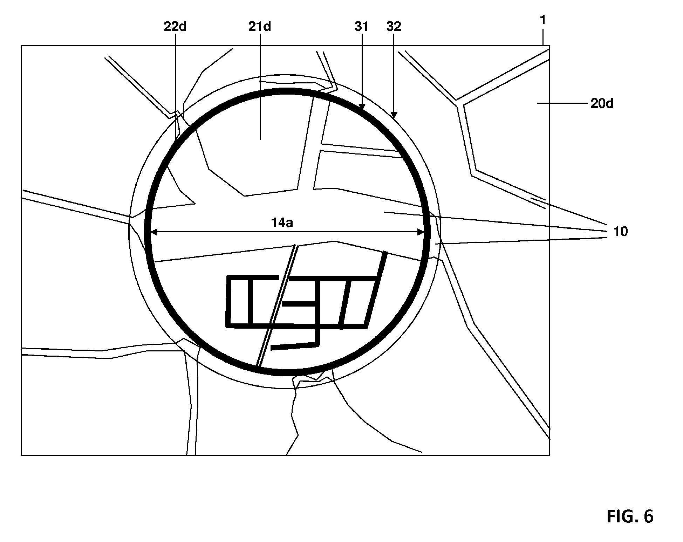

Fig. 6 is a schematic representation of a display 1 displaying three map views 20d, 21d, and 22d, further illustrating the advantageous effects of the embodiment according to Fig. 5. In particular, depicted are a first map view 20d, a second map view 21d, and a third map view 22d. The second map view 21d is delimited from the third map view 22d at its outer boundary 31 by means of a visible border line. However, it should be understood that also an embodiment is possible, where the second map view's outer boundary 31 is not graphically represented in any form. The same applies to the third map view's outer boundary 32. In the embodiment according to Fig. 6, the reference location is not graphically indicated.

The partitioning of the display 1 and the setting of the coordinate systems and the scales of the first, second, and third map views is adapted according to the embodiment depicted in Fig. 5. As can be seen from Fig. 6, this results in, for example, a continuous change in the extent of the graphical representations of road segments 10 within third map view 22d. For example, as can be seen, a certain road segment 10 has the largest extents on the display within the second map view where the scale corresponds to the largest level of detail. Within the display portion corresponding to the third map view 22d, the extents of the road segment 10 are larger if closer to the display portion corresponding to the second map view 21d and smaller if closer to the display portion corresponding to the first map view 20d. This is because the scale of the third map view changes continuously as a function of the position on the display as depicted and discussed with respect to Figure 5. Within the first map view 20d and the second map view 21d, the scale is not dependent on the position of the display and therefore the extents of a road segment 10 do not change. However, the extents of the road segment 10 within the first map view 20d are smaller if compared to the extents of the road segment within the second map view 21d. As can be seen from Fig. 6, all geographical features within the geographical area defined by the outer extents of the first map view 20d are visible. This is because the third map view 22d depicts the hidden geographic area.

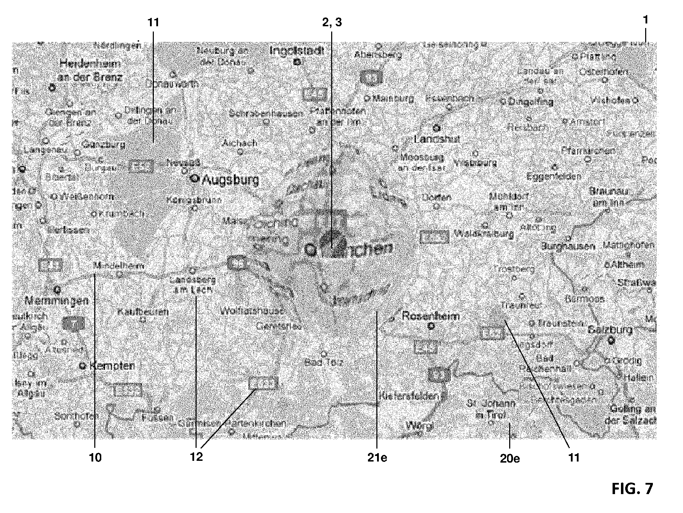

Fig. 7 is a schematic representation of a display for displaying map views according to the present invention. As can be seen from Fig. 7, in this embodiment of the present invention the coordinate system of the second map view 21e is adapted to provide a scale which varies as a function of the position on the display within the second map view 21e. The coordinate system of the second map view 21e is distorted. In particular, it is distorted such that the scale corresponding to the largest scale is provided close to the reference location, whereas, for increasing distance to the reference location within the second map view, the scale is decreased. According to Fig. 7, the position dependence of the scale of the second map view is adapted such as to provide a loupe effect.

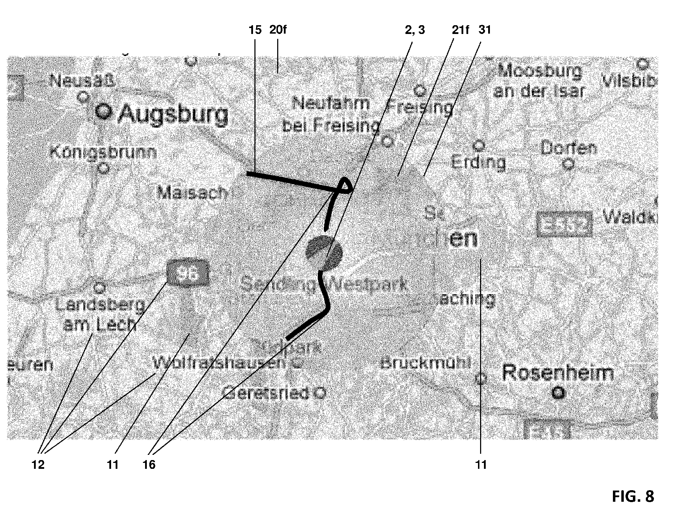

In Fig. 8, a further embodiment of the present invention is depicted. Fig. 8 is a schematic representation of a display for displaying map views. A first map view 20f and a second map view 21f are visible. A graphical representation of a calculated route 15 is depicted. A calculated route may be obtained from a route calculation unit of the navigation system. The calculated route 15 comprises turn instructions 16. Turn instructions indicate locations along the route where the driver needs to, e.g., change the road, take a turn, change the lane, or the like.

In the embodiment as depicted in Fig. 8, the scale of second map view 21f is adapted such that the turn instruction 16 ahead of the current location 2, as well as the previous turn instruction 16 are visible. This has the advantage that the driver can prepare for actions needed with respect to the next turning, while not loosing orientation of the overall route.

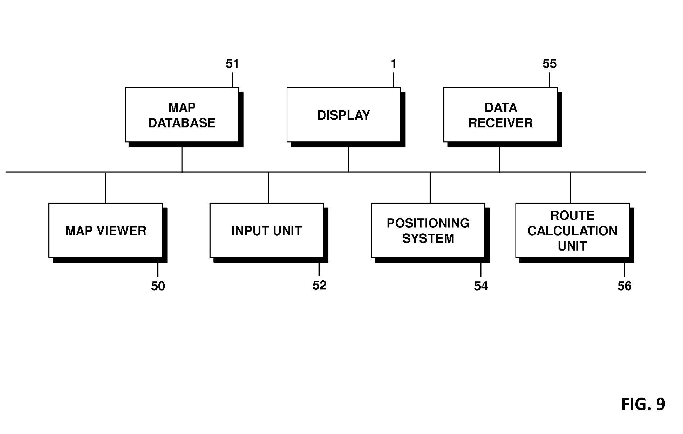

Fig. 9 depicts a schematic representation of a map viewing system according to an embodiment of the present invention. A map viewing system according to the present invention can comprise multiple of the following units, but is not limited thereto: a map viewer 50, a map database 51, an input unit 52, a display 1, a positioning system 54, a data receiver 55, and a router calculation unit 56.

The drawing is to be regarded as being a schematic representation only. Illustrated functional blocks or units in the drawing are not to be construed as indicating that these units or blocks are necessarily implemented as physically separate units. Rather, functional blocks or units may be implemented as separate units or as combined units. They may be implemented by hardware, software, or a combination thereof.

In the following, the functioning of the different units shall be explained in detail. The map viewer 50 may be adapted to receive digital map data from the map database 51. It may be further configured to receive information in the form of geographical coordinates from an input unit 52, a positioning system 54, a data receiver 55, or a route calculation unit 56. The geographical coordinates may relate to a reference location or a highlighted geographical location as discussed above. Based on this information, the map viewer calculates a graphical representation of the geographical data contained in the digital map data according to a method as described herein. This graphical representation is output from the map viewer 50 and sent to the display 1. The display 1 depicts the graphical representation of the geographical data in the form of map views.

The map database 51 may contain geographical information on road segments, other geographical information such as lakes, forests, settlements, or the like, graphical denominators labelling geographical information, and the like.

The input unit 52 may be adapted to receive commands from a user. The commands can be in the form of geographical coordinates. Other commands are, by way of example: change scale, change reference location, change predefined scale ratio. The input unit 52 may be in the form of a button, a push button, button with multiple degrees of freedom, a recognition unit for voice commands, a touch-sensitive display, or a combination thereof.

The positioning system 54 is able to determine the current position of the map viewing system. The positioning system 54 may detect the current location by using at least one of the following: a global positioning system, a cellular network, information on the travelled distance and orientation received from the vehicle itself.

The data receiver 55 may be adapted to receive information, in particular geographical information, by comprising at least one of the following elements, but not limited thereto: a radio data system receiver, a traffic message channel receiver, a digital radio receiver, a cellular network receiver, a satellite radio receiver, an internet connection. The data receiver may, in particular, receive information on traffic events. The data receiver may further receive information on geographical locations in the form of geographical coordinates. This information may be used as the reference location as discussed above.

The route calculation unit 56 may calculate a route to a destination based on the current position and the geographical information obtained from the map database 51. The calculated route may be forwarded from the route calculation unit 56 to map viewer 50 in order to provide a graphical representation of the calculated route.

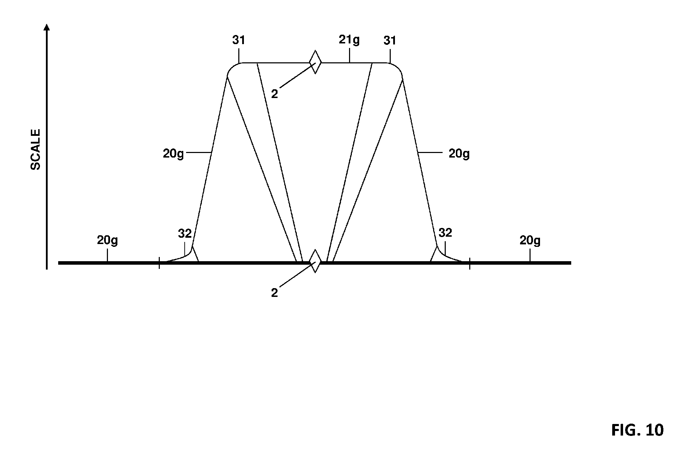

In Fig. 10, an embodiment of the present invention is depicted using a first map view 20g, a second map view 21 g, and a third map view 21 g. The second map view 21 g has a larger scale than first map view 20g. In particular, third map view 21g has vertical extents, indicating a scale which varies as a function of the position on the display. The rate of scale variation as a function of the position on the display is constant for third map view 21g in the present embodiment. Other rates of scale variation are possible, such as quadratic, cosine, or sine, etc.

In Fig. 10 the outer boundary 31 of the second map view 21g and the outer boundary 32 of the first map view 20g are adapted as to provide a smooth transition of the changing scales. In particular, the rate of scale change is adapted smoothly as a function of position on the display. Therefore, no sudden jump of the rate of scale change over position on the display is present in Fig. 10, but a graduate transition between no scale change over position (in the area of first and second map views 20g, 21g) and large but constant scale change over position (in the area of third map view 22g). While the transition of the rate of scale change occurs according to an elliptic gradient of scale change in the outer boundaries 31, 32, other possibilities are conceivable.

While specific embodiments of the invention are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. A method of displaying map views on a display (1) comprising the steps of:
- receiving a reference location (2) in the form of geographic coordinates;
- displaying simultaneously a first map view (20) and a second map view (21),
wherein the first map view (20) is based on a first coordinate system with a first scale,
wherein the second map view (21) is based on a second coordinate system with a second scale being different from the first scale,
wherein the second map view (21) contains the reference location (2),
wherein the reference location (2) has the same position on the display (1) in the first coordinate system and the second coordinate system,
wherein, when the scale of one of the two map views (20, 21) is changed, the scale of the other one of the two map views is automatically determined in such a way that a predefined scale ratio of the second scale with respect to the first scale is obtained.

2. The method of displaying map views according to claim 1,
wherein the second map view (21) is substantially centered with respect to the reference location.

3. The method of displaying map views according claims 1 or 2,
wherein the second scale is larger than the first scale.

4. The method of displaying map views according to any of the preceding claims,
wherein, when the reference location (2) is changed, the first and second map views (20, 21) are updated accordingly.

5. The method of displaying map views according to any one of the preceding claims,
wherein the scale of one of the two map views (20, 21) or the predefined scale ratio is changed automatically depending on the reference location (2).

6. The method of displaying map views according to claim 5,
wherein, when the reference location (2) is within a predefined distance to a predefined location, the second scale is automatically increased and/or the predefined scale ratio is automatically decreased.

7. The method of displaying map views according to any one of the preceding claims,
wherein the reference location (2) is either a current geographical location (3) of a user or a highlighted geographical location of special interest to the user.

8. The method of displaying map views according to claim 7,
wherein the highlighted geographical location is a geographical location selected by the user.

9. The method of displaying map views according to any one of the preceding claims,
wherein the second scale is dependent on the position on the display (1) within second map view (21).

10. The method of displaying map views according to any one of the preceding claims,
wherein the first and second map views (20, 21) are displayed in contiguous portions of the display (1),
wherein the portion corresponding to the second map view (21) is substantially surrounded by the portion corresponding to the first map view (20).

11. The method of displaying map views according to claim 10,
wherein the geographical region of the first map view (20) hidden by the second map view (21) is displayed in a portion of the display (1) between the first map view (20) and the second map view (21) in the form of a third map view (22) with a third scale.

12. The method of displaying map views according to claim 11,
wherein the third scale is dependent on the position on the display (1), such that the transitions between the first and the third, and between the second and the third scales are continuous.

13. The method of displaying map views according to any of the preceding claims,
wherein when an orientation of one of the two map views (20, 21) is changed, orientation of the other one of the two map views (20, 21) is changed accordingly.

14. Map viewing system displaying map views on a display, the system comprising:
- a map database (51) containing digital map data,
- a map viewer configured to prepare for display a first map view (20) and a second map view (21) based on the digital map data, such that the first map view (20) is based on a first coordinate system with a first scale, the second map view (21) is based on a second coordinate system with a second scale being different from the first scale, and the second map view (21) contains a reference location (2) in the form of geographic coordinates,
wherein the display is configured to simultaneously display the first map view and the second map view,
wherein the reference location (3) has the same position on the display (1) in the first coordinate system and the second coordinate system, wherein, when the scale of one of the two map views (20, 21) is changed, the map viewer is configured to automatically change the scale of the other one of the two map views in such a way that a predefined scale ratio of the second scale with respect to the first scale is obtained.

15. Map viewing system displaying map views according to claim 14, which is configured to perform a method according to any of claims 1-13.
